# EUROPÄISCHE PATENTSCHRIFT

(11) **EP 2 763 838 B1**
(45) Veröffentlichungstag und Bekanntmachung des Hinweises auf die Patenterteilung: **15.06.2016**
(21) Anmeldenummer: 13747411.0
(22) Anmeldetag: 09.08.2013
(51) Int. Cl.: B29C 65/08, B29C 65/64, F16C 1/14

(54) **ANTRIEBSKABEL MIT ULTRASCHALLGESCHWEIßTER ABSCHLUSSKAPPE SOWIE VERFAHREN ZUR HERSTELLUNG EINES SOLCHEN ANTRIEBSKABELS**
DRIVE CABLE WITH ULTRASONICALLY-WELDED TERMINAL CAP AND METHOD FOR PRODUCING SUCH A DRIVE CABLE
CÂBLE D'ENTRAÎNEMENT AVEC CAPUCHON D'EXTRÉMITÉ SOUDÉ PAR ULTRASONS AINSI QUE PROCÉDÉ DE FABRICATION D'UN TEL CÂBLE D'ENTRAÎNEMENT

(30) Priorität: 26.10.2012 DE 102012110257
(43) Veröffentlichungstag der Anmeldung: 13.08.2014
(73) Patentinhaber: meflex Telecontrol GmbH & Co. KG, 35630 Ehringshausen (DE)
(72) Erfinder:
(74) Vertreter: Müller, Eckhard
(86) Internationale Anmeldenummer: PCT/EP2013/066730
(87) Internationale Veröffentlichungsnummer: WO 2014/063846

(56) Entgegenhaltungen:
- WO-A1-2009/092608
- DE-C1- 3 607 724
- JP-A- H1 054 417

## Beschreibung

Die Erfindung betrifft ein Verfahren zur Herstellung eines Antriebskabels, insbesondere zum Einsatz in Kraftfahrzeugen, wobei wenigstens ein Ende des Antriebskabels mit einer Abschlusskappe versehen und durch Ultraschallschweißen mit dieser verbunden wird. Ferner betrifft die Erfindung ein Antriebskabel mit wenigstens einer Abschlusskappe.

Antriebskabel mit wenigstens einer Abschlusskappe an einem Kabelende sind aus dem Stand der Technik bekannt und kommen insbesondere bei Hebe- und/oder Schiebedächern von Kraftfahrzeugen oder bei Rollos zum Einsatz. Typischerweise bestehen derartige Antriebskabel aus Metalldrähten, die zu einer Litze gefertigt sind, auf welche wiederum eine Steigungswendel aufgebracht ist. Zum Betätigen bzw. Verstellen eines jener Bauteile, beispielsweise eines Schiebedachs, ist das Antriebskabel an diesem befestigt und wird beispielsweise mit einer motorangetriebenen Schnecke axial bewegt, welche in den durch die Steigungswendel gebildeten Gewindegang am Antriebskabel eingreift.

Die meist als Endlosware hergestellten Antriebskabel werden vor dem Einbau bzw. der Endanwendung auf die benötigte Einbaulänge abgelängt. Die dabei entstehenden Antriebskabelenden neigen aufgrund der losen Einzeldrähte/Litzen des Kabels zum Aufspleißen und zur Gratbildung.

Ein weiteres Problem jener Antriebskabel ist, dass sie in montiertem Zustand an den Enden zum Klappern neigen.

Zur Lösung dieser Probleme ist es aus dem Stand der Technik bereits bekannt, die Antriebskabel an ihrem Antriebskabelende mit einer Abschlusskappe, beispielsweise einer Metallhülse, zu versehen. Diese Metallhülsen werden üblicherweise aufgehämmert. Es hat sich jedoch gezeigt, dass mit dieser Lösung zwar ein Aufspleißen des Antriebskabelendes wirkungsvoll verhindert werden kann. Allerdings neigt das Antriebskabel im eingebauten Zustand an seinem Ende aufgrund des verwendeten Metalls nach wie vor zu unerwünschten Klappergeräuschen.

Zur Behebung des Klapperproblems bei Metallhülsen wurden alternativ Hülsen oder Kappen aus Kunststoff vorgeschlagen, die direkt an das Antriebskabelende angespritzt werden. In der Praxis hat sich jedoch herausgestellt, dass eine direkt aufgespritzte Kunststoffhülse häufig nicht ausreichend fest am Kabelende hält, da dem Antriebskabel mitunter noch Ölreste von seiner Produktion her anhaften. Daher muss stets sichergestellt werden, dass zumindest die Antriebskabelenden frei von Öl sind, was durch kostenintensive und zeitaufwendige Änderungen der Produktionsverfahren oder durch zusätzliche Arbeitsschritte zur Entfettung geschehen kann.

Ein weiteres Problem der aufgespritzten Abschlusshülsen aus Kunststoff besteht darin, dass das Kunststoffmaterial durch den herstellungsbedingt hohen Spritzdruck dazu neigt, entlang des oder der aufgebrachten Steigungswendel zu wandern und dort auszuhärten. Infolge kann das an der Steigungswendel befindliche Kunststoffmaterial abspreizen und somit ebenfalls Ursache für Klappergeräusche sein.

Alternativ werden seit einigen Jahren auch vorgefertigte Kunststoffhülsen verwendet, die auf das Antriebskabelende aufgesteckt und mit diesem durch Ultraschallschweißen verbunden werden. Die Ultraschallverschweißung erfolgt dabei punktuell mittels einer kleinflächigen, mitunter spitzen Sonotrode.

Eine Sonotrode ist jenes Bauteil einer Ultraschall-Schweißmaschine, das im direkten Kontakt zum Schweißteil steht und über das die zum Schweißen verwendeten hochfrequenten mechanischen Schwingungen, d.h. der Ultraschall, in das Schweißteil eingeleitet wird.

Bei der punktuellen Ultraschallschweißung der Abschlusskappe wird diese vornehmlich seitlich mit ein oder zwei Schweißpunkten am Antriebskabelende fixiert. Dabei entstehen jedoch unvermeidlich Schweißgrate, die wiederum Ursache für Klappergeräusche beim Betätigen des Antriebskabels sind.

Weiterhin hat sich gezeigt, dass punktgeschweißte Abschlusskappen häufig nicht ausreichend fest am Antriebskabelende haften, insbesondere dann, wenn die Steigungswendel im Endbereich des Anschlusskabels bis in die Abschlusskappe ausläuft, d.h. von der Abschlusskappe mit abgedeckt wird. Als Lösung wurde vorgeschlagen, dass vor dem punktuellen Verschweißen der Abschlusskappe mit dem Antriebskabel das Ende des Antriebskabels vollkommen abgewendelt wird. Hierzu wird die Steigungswendel des Antriebskabels über eine gewisse Länge im Endbereich des Kabels entfernt, so dass der Kabelkern freiliegt, auf den dann die eine Bohrung aufweisende Kunststoffkappe aufgesteckt und anschließend verschweißt wird. Das Abwendeln des Antriebskabels stellt jedoch einen kosten-und zeitintensiven Zusatzarbeitsschritt dar und bedingt außerdem, dass an jener Stelle, an der die Steigungswendel abgetrennt wurde, scharfe Kanten entstehen, die nicht nur störende Geräusche verursachen, sondern zudem auch die Kunststoffhülse beschädigen können.

Ein Verfahren zur Herstellung eines Antriebskabels nach dem Oberbegriff des Anspruchs 1 ist beispielsweise aus der DE 36 07 724 C1 bekannt, welche ein Antriebskabel offenbart, das mit einem Kunststoffteil eines Führungsschlittens durch Ultraschallbeaufschlagung verbunden werden kann. Dabei dringt das Material des Kunststoffteils in Zwischenräume des aus verdrillten Einzeldrähten bestehenden Antriebskabels ein. Aus dieser Druckschrift ist auch ein Antriebskabel nach dem Oberbegriff des Anspruchs 6 bekannt.

Weiterhin offenbart die WO 2009/092608 A1 eine Abschlusskappe für ein Antriebskabel, wobei diese Abschlusskappe einen Anschlussabschnitt aufweist, der aus Metall besteht und sich gut kalt verformen lässt. Der Anschlussabschnitt der Abschlusskappe ist mit einem aus Kunststoff bestehenden Endabschnitt verbunden. Diese Abschlusskappe mit aus Metall bestehendem Anschlussabschnitt bzw. die Abschlusskappe der Fig. 6 dieses Dokuments, welche gänzlich aus Metall besteht, wird mit dem Antriebskabel nicht durch Ultraschall-Schweißen verbunden. Vielmehr erfolgt diese Verbindung durch einen Hämmern der metallenen Teile. Es handelt sich somit um eine völlig unterschiedliche Verbindungstechnik zum Ultraschall-Schweißen, wobei dieser Druckschrift weiterhin nicht zu entnehmen ist, dass das Antriebskabelende konisch angeschliffen ist.

Die JP H 10-54417 A zeigt, wie eine Abschlusskappe mit einem mit Kunststoff ummantelten Kabel durch Ultraschall-Schweißen verbunden wird. Allerdings wird bei diesem Stand der Technik nicht die gesamte Außenfläche der Abschlusskappe mit Ultraschall beaufschlagt, sondern tritt die Sonotrode nur mit einem schmalen Umfangsabschnitt der Abschlusskappe in Kontakt. Hauptgegenstand dieses Standes der Technik ist ein rapides Abkühlen unmittelbar nach dem Ultraschall-Schweißen, wobei mittels eines Kühlmittels die Kappe gekühlt wird.

Darüber hinaus ist aus DE 31 38 822 A1 ein Bedienungskabel für Kraftfahrzeug-Schiebedächer oder -Fensterheber mit einer Seele aus mehreren verdrillten Stahldrähten und einer umlaufenden Spiralwicklung bekannt, an dessen einen Ende ein Führungskörper aus Kunststoff über eine daran angeformte Hülse zug- und/oder drehfest angeschweißt ist. Die Spiralwicklung umfasst jedoch nicht das von der Hülse umschlossene Ende der Seele, sondern reicht nur bis an die Stirnfläche der Hülse, ist also von der Hülse nicht umschlossen. Vielmehr ist die Hülse direkt auf die Seele geschweißt. Die Verschweißung erfolgt mittels Ultraschall derart, dass der Kunststoff der Hülse erweicht und in die Zwischenräume zwischen den einzelnen Drähten der Seele eindringen kann und nach dem Ultraschalleintrag wieder erhärtet. Zum Ultraschallverschweißen dient ein Stempel eines Ultraschallschweißgerätes, der während des Schweißvorgangs auf den zu verschweißenden Bereich der Hülse gepresst wird. Aber auch hier ist das Abwendeln der Spiralwicklung mit dem Problem verbunden, dass an jener Stelle, an der die Wicklung abgetrennt wurde, scharfe Kanten entstehen, die nicht nur störende Geräusche verursachen, sondern zudem auch die Kunststoffhülse beschädigen können.

Aufgabe der vorliegenden Erfindung ist es daher, ein Verfahren zur Herstellung eines Antriebskabels mit wenigstens einer Abschlusskappe sowie entsprechende Antriebskabel mit Abschlusskappe der eingangs genannten Art dahingehend zu verbessern, dass sich einerseits die Kosten für die Herstellung reduzieren und andererseits das Verfahren zur Herstellung des Antriebskabels mit Abschlusskappe gewährleistet, dass das Antriebskabelende wirkungsvoll vor einem Aufspleißen der Drähte geschützt ist, gleichzeitig die Klapperneigung der Antriebskabel wirkungsvoll gemindert wird und die Abschlusskappe ausreichend fest auf dem Antriebskabelende haftet.

Die Erfindung wird gelöst durch ein Verfahren zur Herstellung eines Antriebskabels mit wenigstens einer Abschlusskappe mit den Merkmalen des Anspruchs 1 und einem Antriebskabel mit wenigstens einer Abschlusskappe gemäß dem nebengeordneten Anspruch 6.

Das erfindungsgemäße Verfahren zur Herstellung eines Antriebskabels, bei dem wenigstens ein Ende des Antriebskabels mit einer Abschlusskappe versehen und durch flächiges Ultraschallschweißen mit dieser verbunden wird, zeichnet sich dadurch aus, dass eine Steigungswendel des Antriebskabels vor dem Verbinden mit der Abschlusskappe im Bereich des Antriebskabelendes konisch angeschliffen wird. Dadurch lässt sich die Abschlusskappe besonders einfach auf das Antriebskabelende aufsetzen. Insbesondere ist so gewährleistet, dass auch die auslaufende Steigungswendel des Antriebskabels von der Abschlusskappe überdeckt wird. Dadurch wird u.a. vermieden, dass der Wendeldrahtanfang außerhalb der Abschlusskappe liegt, was bei den aus dem Stand der Technik bekannten abgewendelten Antriebskabeln dazu geführt hat, dass eventuell vorhandene scharfe Kanten am Wendeldrahtanfang einerseits die Abschlusskappe von außen beschädigen konnten und anderseits unerwünschte Geräusche beim Betätigen des Antriebskabels verursachten. Bevorzugt wird das Antriebskabelende unter einem Winkel von 10° bis 30°, insbesondere 20°, zur Längsachse des Antriebskabels konisch angeschliffen. Bevorzugt weist das Kabelende nach dem Anschleifen eine kugelstumpfartige Form auf. Bevorzugt sind beide Enden des Antriebskabels mit einer Abschlusskappe versehen und durch Flächen-Ultraschallschweißen mit dieser verbunden. Die beim Punkt-Ultraschallschweißen auftretenden Probleme, nämlich die Gratbildung an den Schweißpunkten sowie eine häufig unzureichende Festigkeit der punktuellen Schweißstelle, werden dadurch vermieden, dass die zum Ultraschallschweißen zugeleiteten mechanischen Schwingungen, also der Ultraschall, nicht lokal über ein mehr oder weniger punktförmiges Schweißwerkzeug zugeführt wird, sondern flächig über im wesentlichen die gesamte Außenfläche der Abschlusskappe.

Dadurch werden die zugeleiteten mechanischen Schwingungen im Wesentlichen gleichmäßig über die gesamte Außenfläche von der Abschlusskappe absorbiert, wodurch sich diese gleichmäßig erwärmt. Insbesondere wird dadurch erreicht, dass das Material der Abschlusskappe gleichmäßig zu erweichen beginnt, so dass sämtliche Stellen, an denen die Abschlusskappe mit dem zu verbindenden Antriebskabelende in Kontakt steht, gleichmäßig aufschmelzen und zur Verbindung betragen. Im Gegensatz zum lokalen Ultraschallschweißen wird so die Kontaktfläche der Schweißverbindung deutlich erhöht, insgesamt also das Haftvermögen bzw. die Abzugskraft der Abschlusskappe am Antriebskabelende deutlich gesteigert.

Das flächige Eintragen des Ultraschalls hat zudem den Vorteil, dass sich auf der Außenfläche der Abschlusskappe keine Grenzzonen zwischen aufgeschmolzenem und nicht aufgeschmolzenem Material ausbilden, die beim punktförmigen Ultraschallschweißen dadurch entstehen, dass die bisher eingesetzten Schweißwerkzeuge bzw. Sonotroden nur lokal mit dem Material in Kontakt stehen und deswegen nur lokal Ultraschall in das Werkstück eingetragen haben. Jene Grenzzonen führen jedoch beim punktförmigen Ultraschallschweißen gerade zur Ausbildung von Schweißgraten. Demgegenüber können sich durch das flächige Eintragen des Ultraschalls keine Grenzzonen und damit auch keine Grate bilden.

Nach einer ersten vorteilhaften Ausgestaltung der Erfindung erfolgt der Ultraschalleintrag mittels einer Sonotrode, die während des Schweißens mit im Wesentlichen der gesamten Außenfläche der Abschlusskappe in Kontakt steht. Eine Sonotrode ist jenes Bauteil einer Ultraschall-Schweißmaschine, das im direkten Kontakt zum Schweißteil steht und über das die zum Schweißen verwendeten hochfrequenten mechanischen Schwingungen, d.h. der Ultraschall, in das Schweißteil eingeleitet wird. Die Sonotrode dient also als Überträger der Schwingungsenergie zur Fügefläche. Dadurch, dass die Sonotrode nach der vorteilhaften Ausgestaltung der Erfindung während des Schweißens mit im Wesentlichen der gesamten Außenfläche der Abschlusskappe in Kontakt steht, wird gewährleistet, dass der Ultraschalleintrag flächig über im Wesentlichen die gesamte Außenfläche der Abschlusskappe erfolgt.

Bevorzugt weist die Sonotrode eine mit der Außenkontur der Abschlusskappe im Wesentlichen korrespondierende Kontaktfläche auf. Hierdurch ist im jeden Fall gewährleistet, dass der Ultraschalleintrag über im Wesentlichen die gesamte Außenfläche erfolgt, da die Sonotrode überall mit der Abschlusskappe in Kontakt steht.

Insbesondere weist die Sonotrode eine Kavität auf, deren Innenfläche die zuvor beschriebene, mit der Außenkontur der Abschlusskappe korrespondierende Kontaktfläche bildet. Beispielsweise kann die Sonotrode aus einem zylindrischen Werkstück bestehen, dessen Länge so gewählt ist, dass sie der halben Wellenlänge der eingetragenen Schwingung oder einem Vielfachen davon entspricht. Weiterhin wird die Sonotrode in vorteilhafter Weise derart ausgelegt, dass an der Schallübertragungsfläche, das heißt an der Kontaktstelle zur Abschlusskappe, die maximale Amplitude und damit die maximale Schweißenergie vorliegt. Darüber hinaus weist die Kontaktfläche der Sonotrode bevorzugt eine Struktur, insbesondere eine Riffelung oder Rillierung, auf, die zur gezielten Energieeinleitung in die zu verbindenden Werkstücke dient.

Als Material für die Sonotrode kommen insbesondere Titanlegierungen in Betracht. Daneben sind aber auch Sonotroden aus Aluminium oder gehärtetem Stahl oder Titanlegierungen mit einer Beschichtung denkbar.

Bevorzugt wird die Kavität der Sonotrode durch Erodieren, insbesondere Senkerodieren, erzeugt. Hierzu werden typischerweise Erodierelektroden verwendet. Vorliegend kommt deswegen besonders bevorzugt eine Erodierelektrode zum Senkerodieren in Betracht, die eine im Wesentlichen der Außenkontur der Abschlusskappe entsprechende Form aufweist.

Dabei stellt die Erodierelektrode im Wesentlichen eine Negativform der Kavität der Sonotrode bzw. eine Positivform der Abschlusskappe dar. Das Elektrodenmaterial ist vorzugsweise in Abhängigkeit des zu bearbeitenden Materials der Sonotrode gewählt. Vorzugsweise kommen als Elektrodenmaterial Kupfer, Messing, Graphit, Kupferlegierungen oder Hartmetalle in Betracht.

Gemäß einer weiteren vorteilhaften Ausgestaltung des erfindungsgemäßen Verfahrens zur Herstellung eines Antriebskabels mit aufgeschweißter Abschlusskappe wird die Sonotrode während des Schweißens mit einer Anpresskraft auf die Abschlusskappe, insbesondere in Längsrichtung der Längsachse des Antriebskabels, gepresst. Alternativ oder zusätzlich kann auch das Antriebskabel mit der aufgesetzten Abschlusskappe während des Schweißens mit einer Anpresskraft, insbesondere in Richtung der Längsachse des Antriebskabels, auf die Sonotrode gepresst werden. Die Anpresskraft bzw. der Anpressdruck der Sonotrode gegenüber den zu verbindenden Schweißteilen stellt neben der Schweißzeit und der einzubringenden Energie einen einstellbaren Parameter beim Ultraschallschweißen dar, von dem die Qualität der Verschweißung abhängt.

In vorteilhafter Weise sollte die Kraftbeaufschlagung auch nach Beendigung des Ultraschalleintrags aufrecht erhalten werden, damit sich die zu fügenden Teile über eine gewisse Abkühlzeit hinweg ausreichend miteinander verbinden können.

Die Kraft bzw. der Anpressdruck stellt neben der Schweißzeit und der einzubringenden Energie einen einstellbaren Parameter beim Ultraschweißen dar, von dem die Qualität der Verschweißung abhängt. Bevorzugt beträgt die Kraft, mit der die Sonotrode auf die Abschlusskappe bzw. umgekehrt das Antriebskabels auf die Sonotrode gepresst wird, in etwa 10 N bis 150 N, insbesondere 30 N bis 110 N, bevorzugt 100 N.

Insbesondere ist es denkbar, dass die Anpresskraft auf die genannten Werte nicht sprunghaft, sondern kontinuierlich über ein Zeitintervall hochgefahren wird. Hierbei ist es weiterhin denkbar, dass der Schweißprozess erst ab einer bestimmten Anpresskraft startet, insbesondere durch Erreichen eines bestimmten Wertes getriggert wird.

Abhängig vom verwendeten Material und der Form der zu verschweißenden Teile beträgt die Ultraschallfrequenz zwischen 10 kHz und 50 kHz, insbesondere 20 kHz bis 35 kHz, bevorzugt 35 kHz.

Entsprechend ebenfalls abhängig vom Material und der Form der zu verschweißenden Teile beträgt die Schweißenergie zwischen 10 J und 100 J, insbesondere zwischen 15 J und 60 J, bevorzugt 15 J.

Nach einer weiteren vorteilhaften Ausgestaltung des erfindungsgemäßen Verfahrens wird die Sonotrode während des Verschweißens zur Schwundkompensation des erweichenden Materials in Richtung des Antriebskabels verfahren. Hierzu ist das Antriebskabel beispielsweise in einem Halter festgelegt, während die Sonotrode die Abschlusskappe umschließt und gegen das Antriebskabelende verfahren wird. Hierdurch wird gewährleistet, dass die Abschlusskappe, die eine Öffnung zum Einführen des Anschlusskabelendes aufweist, vollständig auf das Antriebskabelende aufgeschoben und mit diesem nachhaltig verbunden wird.

Selbstverständlich ist es auch möglich, dass anstelle der Sonotrode das Antriebskabel während des Schweißens entlang seiner Längachse in Richtung der festgelegten Sonotrode verfahren wird. Darüber hinaus ist es aber auch denkbar, dass sowohl die Sonotrode als auch das Antriebskabel mit aufgesetzter Abschlusskappe während des Verschweißens zur Schwundkompensation relativ zueinander bzw. aufeinander zu verfahren werden.

Nach einer weiteren vorteilhaften Ausgestaltung des erfindungsgemäßen Verfahrens kann die Abschlusskappe vor dem Verschweißen zuerst mit der Sonotrode und anschließend mit dem Antriebskabelende zusammengeführt werden. Hierdurch lässt sich insbesondere der Herstellungsprozess automatisieren. Typischerweise wird hierzu zunächst die Abschlusskappe beispielsweise in die Kavität der Sonotrode eingesetzt und dann zusammen mit der Sonotrode in Richtung Antriebskabelende verfahren. Dort wird die Abschlusskappe mit Sonotrode auf das Antriebskabelende aufgesetzt und sodann mit einer bestimmten Kraft und Vortrieb entlang der Längsachse des Antriebskabels mit diesem ultraschallverschweißt.

Denkbar ist selbstverständlich auch, dass die Abschlusskappe vor dem Verschweißen zuerst mit dem Antriebskabelende und anschließend mit der Sonotrode zusammengeführt wird, d.h. die Abschlusskappe wird in einem ersten Arbeitsschritt zuerst auf das Antriebskabelende aufgesetzt. In einem zweiten Arbeitsschritt wird dann die Sonotrode mit der Abschlusskappe zusammengeführt, indem sich die Sonotrode mit ihrer Kavität über die Abschlusskappe stülpt.

Ein unabhängiger Gedanke der Erfindung betrifft ein Antriebskabel mit wenigstens einer Abschlusskappe an einem Ende des Antriebskabels, das durch das zuvor beschriebene erfindungsgemäße Verfahren herstellbar ist, also ein Antriebskabel mit aufgesetzter Abschlusskappe, das durch ein Flächen-Ultraschallschweißen mit dem Antriebskabelende fest verbunden ist.

Dabei weist die Abschlusskappe eine zylindrische oder konische Öffnung zur Aufnahme des angeschliffenen Antriebskabelendes auf, so dass die Abschlusskappe besonders einfach auf das zylindersymmetrische Ende des Antriebskabels aufgesetzt bzw. gestülpt werden kann. Durch das Aufnehmen des Kabelendes in einer solchen Öffnung ist die Festigkeit und Belastbarkeit der Verbindung zwischen Abschlusskappe und Antriebskabel besonders gut gewährleistet. Gemäß der Erfindung ist das Antriebskabel mit Abschlusskappe derart ausgebildet, dass die im Bereich des Antriebskabelendes angeschliffene Steigungswendel bis in die Öffnung der Abschlusskappe verläuft, so dass eventuell vorhandene scharfe Kanten am Wendeldrahtanfang durch die Abschlusskappe verdeckt sind. Auf diese Weise werden u.a. unerwünschte Geräusche beim Betrieb des Antriebskabels vermieden und zudem die Abschlusskappe vor Beschädigungen geschützt.

Insbesondere weist die Öffnung die im Wesentlichen maßgleiche Form wie das bevorzugt angeschliffene Antriebskabelende auf. Bevorzugt ist die Öffnung, vor allem der Durchmesser, weinig größer als das angeschliffene Antriebskabelende, damit diese möglichst einfach in die Öffnung eingeführt werden kann. Ferner beträgt die Tiefe der Öffnung bevorzugt wenigstens das Eineinhalbfache ihres Durchmessers. Die zylindrische Öffnung kann beispielsweise als einfache Zylinderbohrung oder als abgesetzte Stufenbohrung ausgebildet sein.

Vorzugsweise hat die Abschlusskappe selbst eine zylindersymmetrische Form, die sich an einem Ende kegelförmig oder kegelstumpfförmig verjüngen kann. Die Verjüngung dient vornehmlich zum Einführen des Antriebskabels am späteren Einsatzort. Insgesamt gleicht die Abschlusskappe dann einem Projektil oder Geschoss. Die kegelförmige Verjüngung kann beispielsweise geradlinig oder gekrümmt, insbesondere konvex gekrümmt, verlaufen.

Eine Öffnung zur Aufnahme des Antriebskabelendes erlaubt weiterhin eine gute Zentrierung der Abschlusskappe auf dem Kabelende. Insbesondere dann, wenn die Öffnung koaxial zur zylindersymmetrischen Außenkontur der Abschlusskappe angeordnet ist, ist automatisch eine ausreichende Achsenparallelität und Koaxialität zwischen Abschlusskappe und Antriebskabel gewährleistet.

Sofern die Öffnung in der Abschlusskappe konisch ausgebildet ist, weist sie bevorzugt denselben Steigungswinkel auf wie das konisch angeschliffene Antriebskalbelende, also einen Steigungswinkel von 10° bis 30°, insbesondere 20°, zu Längsachse des Antriebskabels bzw. zur eigenen Längsachse.

Darüber hinaus weisen Abschlusskappe und Antriebskabel mit Steigungswendel vorzugweise den gleichen Außendurchmesser auf, so dass das Antriebskabel mit Abschlusskappe eine kontinuierliche Oberfläche besitzt.

Ferner kann die Anschlusskappe eine Farbkennzeichnung aufweisen, insbesondere aus einem farbigen Material bestehen. Die Farbkennzeichnung dient zur Typisierung des Antriebskabels nach seinen Eigenschaften durch den Hersteller oder den Endnutzer entsprechend einer Korrespondenzliste. Die Farbkennzeichnung ist bei einem Material der Abschlusskappe aus Kunststoff in einfacher Weise zu realisieren.

Nach einer weiteren vorteilhaften Ausgestaltung des Antriebskabels besteht die Abschlusskappe aus einem polymeren, vorzugsweise thermoplastischen Kunststoff, insbesondere aus Polyoxymethylen, Polyamid oder Polypropylen. Diese Kunststoffe eignen sich in besonderer Weise für das Ultraschallschweißen.

Weiterhin kann die Anschlusskappe auf der Außenfläche radial verteilte, insbesondere axial verlaufende Stege aufweisen. Diese können zusätzlich Klappergeräusche reduzieren und den Einbau des Antriebskalbs erleichtern. Entsprechend weist die Sonotrode eine Form auf, die der Außenkontur der Abschlusskappe mit Stegen im Wesentlichen entspricht.

Weitere Ziele, Vorteile, Merkmale und Anwendungsmöglichkeiten der vorliegenden Erfindung ergeben sich aus der nachfolgenden Beschreibung eines Ausführungsbeispieles anhand der Zeichnung. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
- Fig. 1: ein erstes Ausführungsbeispiel eines erfindungsgemäßen Antriebskabels mit Abschlusskappe,
- Fig. 2: einen axialen Querschnitt durch die Abschlusskappe gemäß Figur 1,
- Fig. 3: ein zweites Ausführungsbeispiel eines erfindungsgemäßen Antriebskabels mit Abschlusskappe,
- Fig. 4: einen axialen Querschnitt durch die Abschlusskappe gemäß Figur 3,
- Fig. 5: eine Seitenansicht des angeschliffenen Antriebskabelendes ohne Abschlusskappe gemäß einer der Figuren 1 oder 3,
- Fig. 6 - 8: schematische Darstellungen des erfindungsgemäßen Verfahrens zur Herstellung eines Antriebskabels mit Abschlusskappe durch Ultraschallschweißen mittels einer Sonotrode,
- Fig. 9: ein Ausführungsbeispiel einer Erodierelektrode zur Herstellung einer Sonotrode zum Ultraschallschweißen einer Abschlusskappe auf ein Antriebskabelende.

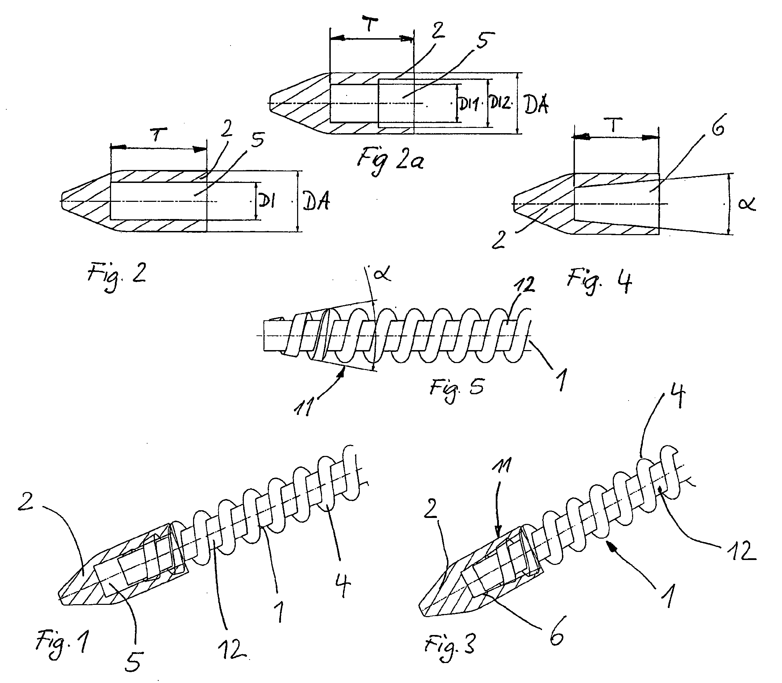

Die Figuren 1 und 2 bzw. 3 und 4 zeigen ein erstes und ein zweites Ausführungsbeispiel eines erfindungsgemäßen Antriebskabels 1 mit Abschlusskappe 2, die auf einem Ende 11 des Antriebs 1 aufgesetzt und mittels Ultraschweißen mit diesem fest verbunden ist.

In beiden Ausführungsbeispielen besteht das Antriebskabel 1 aus zu einer Litze gefertigten Metalldrähten. Dies bildet den Kern 12 des Antriebskabels 1, auf den eine Steigungswendel 4 aufgebracht ist. Vor dem Aufsetzen und Verbinden der Abschlusskappe 2 mit dem Antriebskabels 1 wird das Antriebskabelende 11 gemäß den hier gezeigten Ausführungsbeispielen nach den Figur 1 bis 4 im Endbereich konisch angeschliffen. Wie aus Figur 5 ersichtlich, wird hierzu vornehmlich nur das Steigungskabel 4 des Antriebskabels 1 angeschliffen, nicht aber der Kern 12. Somit weist das Antriebskabelende 11 eine kegelstumpfförmige Außenkontur auf, wobei der Steigungswinkel α des Konus in den hier gezeigten Ausführungsbeispielen in etwa 20° beträgt.

Auf das angeschliffene Antriebskabel 11 wird die in den vorliegenden Ausführungsbeispielen zylindersymmetrische sowie projektilartig ausgebildete Abschlusskappe 2 aufgesetzt. Diese weist hierzu eine zentrisch, axial verlaufende Öffnung 5 bzw. 6 auf, die entweder gemäß dem Ausführungsbeispiel nach Figur 2 zylinderförmig oder gemäß dem Ausführungsbeispiel nach Figur 4 konusförmig, insbesondere kegelstumpfförmig, ausgebildet ist.

Die zylinderförmige Öffnung 5 gemäß Figur 2 weist einen Durchmesser DI auf, der wenig größer, etwa 10-20 % größer, als der Außendurchmesser des Kerns 12 des Antriebskabels 1 ist. Demgegenüber entspricht der Außendurchmesser DA der Abschlusskappe 2 bei dem hier gewählten Ausführungsbeispiel im Wesentlichen dem Außendurchmesser des Antriebskabels 1 mit Steigungswendel 4.

In analoger Weise ist die kegelstumpfförmige Öffnung 6 beim Ausführungsbeispiel nach Figur 4 im Wesentlichen formgleich ausgebildet wie das angeschliffene Antriebskabelende 11 des Antriebskabels 1. Insbesondere weist es in etwa denselben Steigungswinkel α wie der Konus des abgeschliffenen Antriebskabelendes 11 auf.

Figur 2a zeigt eine weitere Variante der Öffnung, die ein alternatives Ausführungsbeispiel zwischen jenem gemäß Figur 2 und jenem gemäß Figur 4 darstellt. Anstelle einer einfachen Zylinderbohrung bzw. der konischen Vertiefung ist die Öffnung 5 beim Ausführungsbeispiel gemäß Figur 2a als abgesetzte Stufenbohrung ausgebildet, wobei die erste Stufe einen kleineren Durchmesser DI1 und die zweite einen größeren Durchmesser DI2 aufweist.

In den gezeigten Ausführungsbeispielen beträgt die Tiefe der Öffnung 5 bzw. 6 wenigstens das 1 ½ -fache des Durchmessers DI bzw. des mittleren Durchmessers des Konus bzw. der Stufenbohrung. Die Tiefe T der Öffnung ist darüber hinaus bevorzugt größer gewählt als die entsprechende Eindringtiefe des angeschliffenen Antriebkabelendes 11, wenn dieses in die Öffnung eingesetzt wird. Dadurch besteht die Möglichkeit, dass das Antriebskabelende 11 beim Anschmelzen der Kontaktfläche der Abschlusskappe 2 während des Ultraschallschweißens weiter in die Öffnung eindringen kann, wodurch sich der Verbund zwischen Abschlusskappe 2 und Antriebskabelende 11 erhöht.

Die Abschlusskappe 2 besteht in den beiden hier gezeigten Ausführungsbeispielen gemäß den Figuren 2 bzw. 4 aus einem polymeren, vorzugsweise thermoplastischen Kunststoff, insbesondere aus Polyoxymethylen, Polyamid oder Polypropylen. Diese Kunststoffe eignen sich in besonderer Weise zum Ultraschallschweißen.

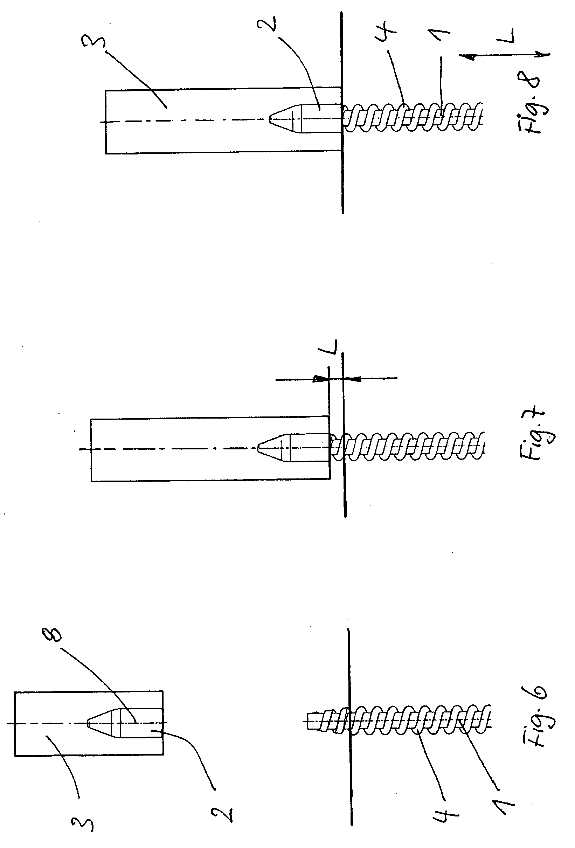

Die Figuren 6 bis 8 zeigen ein mögliches Ausführungsbeispiel des Herstellungsverfahrens eines Antriebskabels 1 mit Abschlusskappe 2, bei dem die Abschlusskappe 2 mittels einer Sonotrode 3 mit dem Antriebskabelende 11 ultraschallverschweißt wird. Hierzu weist die stabförmige Sonotrode 3 eine der Außenkontur der Abschlusskappe 2 im Wesentlichen entsprechende Kavität 8 auf, in der die Abschlusskappe 2 vor dem Verbinden eingesetzt wird. So dann wird-wie in Figur 7 gezeigt - die Sonotrode 3 mit eingesetzter Abschlusskappe 2 in Richtung des eingespannten Antriebskabels 1 verfahren und über das Antriebskabelende 11 gestülpt bzw. geschoben.

Danach erfolgt das eigentliche Ultraschallschweißen. Hierzu wird über die Sonotrode 3, die mit der Innenfläche ihrer Kavität 8 im direkten Kontakt mit der Abschlusskappe 2 steht, Ultraschall, d.h. mechanische Schwingungen, in die Abschlusskappe 2 eingebracht. Dabei erwärmt sich die Abschlusskappe 2. Insbesondere schmelzen sämtliche Kontaktflächen der Abschlusskappe 2 zum Antriebskabelende 11 an. Zudem wird die Sonotrode 3 mit der Abschlusskappe 2 während des Ultraschallschweißens mit einer bestimmten Kraft, insbesondere entlang der Längsachse des Antriebskabels 1, auf das Antriebskabelende 11 gepresst. Die Kraft bzw. der Anpressdruck stellt neben der Schweißzeit und der einzubringenden Energie einen einstellbaren Parameter beim Ultraschweißen dar, von dem die Qualität der Verschweißung abhängt. Bevorzugt beträgt die Kraft, mit der die Sonotrode 3 auf die Abschlusskappe 2 gepresst wird, in etwa 10 N bis 150 N, insbesondere 30 N bis 110 N, bevorzugt 100 N.

Insbesondere ist es denkbar, dass die Anpresskraft auf die genannten Werte nicht sprunghaft, sondern kontinuierlich über ein Zeitintervall hochgefahren wird. Hierbei ist es weiterhin denkbar, dass der Schweißprozess erst ab einer bestimmten Anpresskraft startet, insbesondere durch Erreichen eines bestimmten Wertes getriggert wird.

Abhängig vom verwendeten Material und der Form der zu verschweißenden Teile beträgt die Ultraschallfrequenz zwischen 10 kHz und 50 kHz, insbesondere 20 kHz bis 35 kHz, bevorzugt 35 kHz.

Entsprechend ebenfalls abhängig vom Material und der Form der zu verschweißenden Teile beträgt die Schweißenergie zwischen 10 J und 100 J, insbesondere zwischen 15 J und 60 J, bevorzugt 15 J.

Aufgrund der von außen einwirkenden Kraft und des Erweichens des Materials der Abschlusskappe 2 entsteht während des Ultraschallschweißens ein Schwund, der dadurch kompensiert wird, dass die Sonotrode 3 mit eingesetzter Abschlusskappe 2 in Richtung des Antriebkabelendes 11 um eine Strecke L verfahren wird. Hierdurch wird gewährleistet, dass die Abschlusskappe 2 vollständig auf das Antriebskabelende 11 aufgeschoben und mit diesem nachhaltig verbunden wird. Insbesondere kommt das Ende der angeschliffenen Steigungswendel 4 innerhalb der Öffnung 5, 6 zu liegen, so dass eventuell vorhandene scharfe Kanten am Wendeldrahtanfang durch die Abschlusskappe 2 verdeckt sind. Auf diese Weise werden u.a. unerwünschte Klappergeräusche beim Betrieb des Antriebskabels vermieden und zudem die Abschlusskappe 2 vor Beschädigungen geschützt.

Am Ende des Ultraschallschweißprozesses wird der Ultraschalleintrag gestoppt, die Sonotrode 3 aber dennoch mit Kraft auf das Antriebskabelende 11 gepresst. Während dieser Zeit erkaltet das angeschmolzene Material der Abschlusskappe 2, das sich sodann mit dem Antriebskabelende 11 nachhaltig verbindet. Nach Beendigung dieser Abkühlphase kann dann die Sonotrode 3 von der Abschlusskappe 2 entfernt werden.

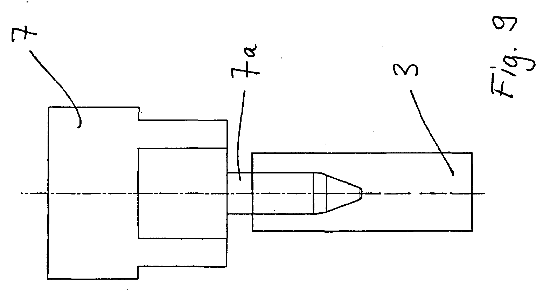

Figur 9 zeigt ein Ausführungsbeispiel einer Erodierelektrode 7 zur Herstellung der Sonotrode 3 mittels Senkerodieren. Hierzu weist die Erodierelektrode 7 einen Erodierstempel 7a auf, dessen Außenkontur im Wesentlichen der Außenkontur der Abschlusskappe 2 entspricht. Beim Erodieren wird somit eine Negativform der Abschlusskappe 2 in die Sonotrode 3 hinein erodiert. Die hinein erodierte Öffnung entspricht der Kavität 8 gemäß Figuren 6 bis 8. Als Elektrodenmaterial kommen vorzugsweise Kupfer, Messing, Graphit, Kupferlegierungen oder Hartmetalle in Betracht.

### Bezugszeichenliste

- 1: Antriebskabel
- 2: Abschlusskappe
- 3: Sonotrode
- 4: Steigungswendel
- 5: Zylindrische Öffnung
- 6: Konische Öffnung
- 7: Erodierelektrode
- 7a: Erodierstempel
- 8: Kavität

- 11: Antriebskabelende
- 12: Kern des Antriebskabels
- DI: Innendurchmesser der Öffnung
- DI1: Innendurchmesser der Öffnung
- DI2: Innendurchmesser der Öffnung
- DA: Außendurchmesser der Abschlusskappe
- L: Verfahrweg
- α: Steigungswinkel des Konus

## Patentansprüche

1. Verfahren zur Herstellung eines Antriebskabels (1), insbesondere zum Einsatz in Kraftfahrzeugen, wie bei Hebe- und/oder Schiebedächern oder Sonnenschutzrollos, wobei wenigstens ein Ende (11) des Antriebskabels (1) mit einer Abschlusskappe (2) versehen und durch Ultraschallschweißen mit dieser verbunden wird, **dadurch gekennzeichnet, dass** der Ultraschalleintrag flächig über im Wesentlichen die gesamte Außenfläche (9) der Abschlusskappe (2) erfolgt und eine Steigungswendel (4) des Antriebskabels (1) vor dem Verbinden mit der Abschlusskappe (2) im Bereich des von der Abschlusskappe (2) überdeckten Antriebskabelendes (11) konisch angeschliffen wird.

2. Verfahren nach Anspruch 1, **dadurch gekennzeichnet, dass** der Ultraschalleintrag mittels einer Sonotrode (3) erfolgt, die während des Schweißens mit im Wesentlichen der gesamten Außenfläche (9) der Abschlusskappe (2) in Kontakt steht.

3. Verfahren nach Anspruch 2, **dadurch gekennzeichnet, dass** die Sonotrode (3) während des Schweißens mit einer Kraft auf die Abschlusskappe (2), insbesondere in Richtung der Längsachse (A) des Antriebskabels (1), gepresst wird und/oder dass das Antriebskabel (1) mit Abschlusskappe (2) während des Schweißens mit einer Kraft, insbesondere in Richtung der Längsachse (A) des Antriebskabels (1), auf die Sonotrode (3) gepresst wird.

4. Verfahren nach Anspruch 2 oder 3, **dadurch gekennzeichnet, dass** zur Schwundkompensation während des Schweißens die Sonotrode (3) in Richtung Antriebskabel (1) und/oder das Antriebskabel (1) in Richtung Sonotrode (3) entlang der Längsachse (A) des Antriebskabels (1) verfahren wird.

5. Verfahren nach einem der Ansprüche 2 bis 4, **dadurch gekennzeichnet, dass** die Abschlusskappe (2) vor dem Schweißen zuerst mit der Sonotrode (3) und anschließend mit dem Antriebskabelende (11) zusammengeführt wird oder dass die Abschlusskappe (2) vor dem Schweißen zuerst mit dem Antriebskabelende (11) und anschließend mit der Sonotrode (3) zusammengeführt wird.

6. Antriebskabel (1) mit wenigstens einer Abschlusskappe (2), insbesondere zum Einsatz in Kraftfahrzeugen, wie bei Hebe- und/oder Schiebedächern oder Sonnenschutzrollos, hergestellt durch ein Verfahren nach einem der vorhergehenden Ansprüche 1 bis 5, **dadurch gekennzeichnet, dass** die Abschlusskappe (2) eine zylindrische oder konische Öffnung (5, 6) oder eine abgesetzte Stufenbohrung zur Aufnahme des konisch angeschliffenen Antriebskabelendes (11) aufweist, wobei die im Bereich des Antriebskabelendes (11) angeschliffene Steigungswendel (4) bis in die Öffnung (5, 6) der Abschlusskappe (2) reicht.

7. Antriebskabel (1) nach Anspruch 6, **dadurch gekennzeichnet, dass** die Abschlusskappe (2) aus einem polymeren, vorzugsweise thermoplastischen Kunststoff, insbesondere aus Polyoxymethylen, Polyamid oder Polypropylen, besteht und/oder hergestellt ist.

## Claims

1. Method for manufacturing a drive cable (1), in particular for use in motor vehicles, as in lifting and/or sliding roofs or sun blinds, wherein at least one end (11) of the drive cable (1) is provided with an end cap (2) and is connected to the same by means of ultrasonic welding, **characterized in that** the ultrasonic input is effected in an areal manner across substantially the entire exterior surface (9) of the end cap (2), and **in that** an ascending spiral (4) of the drive cable (1) is conically ground in the area of the drive cable end (11) that is covered by the end cap (2) before the connection to the end cap (2) is made.

2. Method according to claim 1, **characterized in that** the ultrasonic input is effected by means of a sonotrode (3) that is in contact with substantially the entire exterior surface (9) of the end cap (2) during welding.

3. Method according to claim 2, **characterized in that** during welding the sonotrode (3) is pressed onto the end cap (2) with a force, in particular in the direction of the longitudinal axis (A) of the drive cable (1) and/or that during welding the drive cable (1) together with the end cap (2) is pressed onto the sonotrode (3) with a force, in particular in the direction of the longitudinal axis (A) of the drive cable (1).

4. Method according to claim 2 or 3, **characterized in that** for the purpose of shrinkage compensation during welding the sonotrode (3) is displaced in the direction of the drive cable (1) and/or the drive cable (1) is displaced in the direction of the sonotrode (3) along the longitudinal axis (A) of the drive cable (1).

5. Method according to claim 2 to 4, **characterized in that** before welding the end cap (2) is first brought together with the sonotrode (3) and subsequently with the drive cable end (11), or **in that** before the welding the end cap (2) is first brought together with the drive cable end (11) and subsequently with the sonotrode (3).

6. Drive cable (1), having at least one end cap (2), in particular for use in motor vehicles, such as lifting and/or sliding roofs or sun blinds, manufactured by means of a method according to one of the preceding claims 1 to 5, **characterized in that** the end cap (2) has a cylindrical or conical opening (5, 6) or an offset stepped bore for receiving the conically ground drive cable end (11), wherein the ascending spiral (4) that is ground in the area of the drive cable end (11) reaches up to the opening (5, 6) of the end cap (2).

7. Drive cable (1) according to claim 6, **characterized in that** the end cap (2) consists and/or is made of a polymeric plastic material, preferably of one that is thermoplastic, in particular polyoxymethylene, polyamide or polypropylene.

## Revendications

1. Procédé de fabrication d'un câble d'entraînement (1), en particulier pour l'utilisation dans des véhicules automobiles, comme dans des toits ouvrants et/ou des toits coulissants ou des stores pare-soleil, au moins une extrémité (11) du câble d'entraînement (1) étant pourvue d'un capuchon d'extrémité (2) et étant connecté à celui-ci par soudage par ultrasons, **caractérisé en ce que** l'introduction des ultrasons s'effectue à plat sur essentiellement toute la surface extérieure (9) du capuchon d'extrémité (2) et une hélice de pas (4) du câble d'entraînement (1) étant affûtée sous forme conique avant la connexion au capuchon d'extrémité (2) dans la région de l'extrémité de câble d'entraînement (11) recouverte par le capuchon d'extrémité (2).

2. Procédé selon la revendication 1, **caractérisé en ce que** l'introduction des ultrasons s'effectue au moyen d'une sonotrode (3) qui est en contact avec essentiellement toute la surface extérieure (9) du capuchon d'extrémité (2) pendant le soudage.

3. Procédé selon la revendication 2, **caractérisé en ce que** la sonotrode (3) est pressée avec une certaine force pendant le soudage sur le capuchon d'extrémité (2), en particulier dans la direction de l'axe longitudinal (A) du câble d'entraînement (1), et/ou **en ce que** le câble d'entraînement (1) avec le capuchon d'extrémité (2) est pressé avec une certaine force pendant le soudage sur la sonotrode (3), notamment dans la direction de l'axe longitudinal (A) du câble d'entraînement (1).

4. Procédé selon la revendication 2 ou 3, **caractérisé en ce que** pour compenser l'érosion pendant le soudage, la sonotrode (3) est déplacée dans la direction du câble d'entraînement (1) et/ou le câble d'entraînement (1) est déplacé dans la direction de la sonotrode (3) le long de l'axe longitudinal (A) du câble d'entraînement (1).

5. Procédé selon l'une quelconque des revendications 2 à 4, **caractérisé en ce que** le capuchon d'extrémité (2) est d'abord assemblé à la sonotrode (3) puis à l'extrémité du câble d'entraînement (11) avant le soudage, ou **en ce que** le capuchon d'extrémité (2) est d'abord assemblé avec l'extrémité du câble d'entraînement (11) puis avec la sonotrode (3) avant le soudage.

6. Câble d'entraînement (1) comprenant au moins un capuchon d'extrémité (2), en particulier pour l'utilisation dans des véhicules automobiles, comme dans des toits ouvrants et/ou des toits coulissants ou des stores pare-soleil, fabriqué par un procédé selon l'une quelconque des revendications précédentes 1 à 5, **caractérisé en ce que** le capuchon d'extrémité (2) présente une ouverture cylindrique ou conique (5, 6) ou un alésage étagé en gradin pour recevoir l'extrémité du câble d'entraînement (11) affûtée sous forme conique, l'hélice de pas (4) affûtée dans la région de l'extrémité du câble d'entraînement (11) s'étendant jusque dans l'ouverture (5, 6) du capuchon d'extrémité (2).

7. Câble d'entraînement (1) selon la revendication 6, **caractérisé en ce que** le capuchon d'extrémité (2) se compose de, ou est fabriqué à partir, d'un plastique polymère, de préférence thermoplastique, en particulier de polyoxyméthylène, de polyamide ou de polypropylène.
